# EUROPÄISCHE PATENTSCHRIFT

(11) **EP 2 962 891 B1**
(45) Veröffentlichungstag und Bekanntmachung des Hinweises auf die Patenterteilung: **22.11.2017**
(21) Anmeldenummer: 15001139.3
(22) Anmeldetag: 17.04.2015
(51) Int. Cl.: B60L 11/18, B60M 7/00

(54) **EXTERN AUFLADBARES FAHRZEUG MIT ELEKTROANTRIEB UND LADESTATION FÜR DAS FAHRZEUG**
EXTERNALLY RECHARGEABLE VEHICLE HAVING AN ELECTRIC DRIVE AND RECHARGING STATION FOR THE VEHICLE
VÉHICULE RECHARGEABLE PAR L'EXTÉRIEUR ÉQUIPÉ D'UN ENTRAÎNEMENT ÉLECTRIQUE ET STATION DE CHARGE POUR LE VÉHICULE

(30) Priorität: 03.07.2014 DE 102014009853
(43) Veröffentlichungstag der Anmeldung: 06.01.2016
(73) Patentinhaber: MAN Truck & Bus AG, 80995 München (DE)
(72) Erfinder: Schleufe, Stefan, 81245 München (DE); Soboll, Stefan, 85221 Dachau (DE)
(74) Vertreter: v. Bezold & Partner Patentanwälte - PartG mbB

(56) Entgegenhaltungen:
- DE-A1- 2 405 198
- DE-A1-102008 030 342
- GB-A- 2 475 703

## Beschreibung

Die Erfindung betrifft ein Kraftfahrzeug, insbesondere einen Omnibus, mit einem Energiespeicher für elektrische Energie, einem Elektroantrieb, der mit dem Energiespeicher verbunden ist, und einer elektrischen Anschlusseinrichtung, über die der Energiespeicher zum Laden des Energiespeichers mit einer externen Energiequelle verbunden werden kann. Die Erfindung betrifft ferner eine Ladestation für ein derartiges Fahrzeug, um den Energiespeicher für elektrische Energie durch eine externe Energiequelle aufzuladen.

Bisher werden Elektrofahrzeuge in der Weise aufgeladen, dass das Batteriesystem des Fahrzeugs über Kabel mit den elektrischen Kontakten der ladenden Stromquelle verbunden wird, d. h., das am Fahrzeug angeschlossene Kabel wird z. B. in eine an einer Tankstelle angeordnete elektrische Steckdose einer ladenden Stromquelle eingesteckt. Diese Vorgehensweise ist für die Halter von Elektrofahrzeugen vergleichsweise aufwändig und unbequem.

Aus der Praxis ist es ferner bekannt, einen elektromotorisch angetriebenen Omnibus, auch als E-Bus oder Batteriebus bezeichnet, mittels zweier Oberleitungskontakte an einer zweipoligen Oberleitung aufzuladen. Nachteilig hieran ist, dass im innerstädtischen Bereich oftmals eine entsprechende Infrastruktur mit zweipoligen Oberleitungen fehlt, da die Oberleitung von Bahnen meist einpolig ausgeführt ist, wobei die Rückleitung des Stromes dann über die metallenen Räder und die Schienen der Bahnen zur Versorgungsstation (Unterwerk) erfolgt. Eine Verwendung von einpoligen Oberleitungen ist für Busse wegen der Gummireifen in der Regel nicht möglich.

Aus der DE 24 05 198 ist Kraftfahrzeug nach dem Oberbegriff des Anspruchs 1 benannt. Es ist somit eine Aufgabe der Erfindung, ein verbessertes extern aufladbares Fahrzeug mit Elektroantrieb bereitzustellen, mit dem Nachteile herkömmlicher extern aufladbarer Fahrzeuge mit Elektroantrieb vermieden werden können. Die Aufgabe der Erfindung ist es insbesondere, ein extern aufladbares Fahrzeug mit Elektroantrieb, insbesondere einen zumindest teilweise elektromotorisch angetriebenen Omnibus, bereitzustellen, dessen Traktionsenergiespeicher sich auf für den Fahrer einfache Weise aufladen lässt, wobei die Kosten für die notwendige Ladeinfrastruktur gering gehalten werden können.

Eine weitere Aufgabe ist es, eine Ladestation zum Aufladen des Traktionsenergiespeichers bereitzustellen, mit der Nachteile herkömmlicher Ladestationen vermieden werden können.

Diese Aufgaben werden durch ein Fahrzeug mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Fahrzeug weist in Übereinstimmung mit dem Stand der Technik einen Energiespeicher für elektrische Energie und einen Elektroantrieb, der mit dem Energiespeicher verbunden ist, auf. Der Energiespeicher für elektrische Energie wird in diesem Dokument auch als Traktionsenergiespeicher bezeichnet. Das Fahrzeug ist somit zumindest teilweise elektromotorisch angetrieben. Das Fahrzeug umfasst ferner eine elektrische Anschlusseinrichtung, über die der Energiespeicher mit einer externen Energiequelle verbunden werden kann, um den Energiespeicher an der externen Energiequelle aufzuladen.

Gemäß allgemeinen Gesichtspunkten der Erfindung umfasst die elektrische Anschlusseinrichtung einen aus- und einfahrbaren Oberleitungsstromabnehmer zur Einspeisung elektrischer Energie aus einer stromführenden Leitung einer Oberleitungsanlage und eine aus- und einfahrbare elektrische Kontakteinrichtung, die sich im unteren Bereich des Fahrzeuges befindet und die zur Ausbildung einer Rückleitung elektrisch leitend in Kontakt mit einer Fahrschiene und/oder einer Kontaktplatte bringbar ist. Die im Gegensatz zum Oberleitungsstromabnehmer im unteren Bereich des Fahrzeugs angeordnete elektrische Kontakteinrichtung wird nachfolgend auch als untere Kontakteinrichtung bezeichnet.

Das Kraftfahrzeug kann als elektrisch angetriebenes Nutzfahrzeug, vorzugsweise als elektrisch angetriebener, nicht spurgebundener Omnibus (E-Bus), ausgeführt sein.

Es wurde vorstehend bereits erwähnt, dass die Oberleitung von Bahnen meist einpolig ausgeführt ist. Ein besonderer Vorzug der Erfindung liegt somit darin, dass mittels des Oberleitungsstromabnehmers und der elektrischen Kontakteinrichtung das Fahrzeug durch ein einpoliges Oberleitungssystem aufladbar ist. Stadtbusse und Bahnen nutzen zudem im innerstädtischen Verkehr häufig dieselben Haltestellen. In diesen Fällen ermöglicht die Erfindung die direkte Mitnutzung der Oberleitungsstruktur zum Aufladen des Traktionsenergiespeichers, ohne dass weitere bauliche Änderungen notwendig wären.

Bei Bushaltestellen, die in der Nähe einer Oberleitung bzw. eines Gleises eines schienengebundenen Fahrzeugs liegen, kann eine entsprechende Anbindung an die Infrastruktur des Schienenfahrzeugs durch entsprechende Oberleitungsabspannungen und zugänglich verlegte Anbindungen an den Rückleitungskontakt (Schiene) mit vergleichsweise geringem baulichen Aufwand realisiert werden.

Die elektrische Anschlusseinrichtung kann ausgeführt sein, zum Laden des Energiespeichers den Oberleitungsstromabnehmer und die elektrische Kontakteinrichtung auszufahren, um den Oberleitungsstromabnehmer elektrisch leitend in Kontakt mit der stromführenden Leitung der Oberleitungsanlage zu bringen und die elektrische Kontakteinrichtung elektrisch leitend in Kontakt mit der Fahrschiene und/oder der Kontaktplatte zu bringen. Die elektrische Anschlusseinrichtung kann ferner ausgeführt sein, für den Fahrbetrieb bzw. nach Beendigung des Ladevorgangs den Oberleitungsstromabnehmer und die elektrische Kontakteinrichtung wieder einzufahren.

Im Gegensatz zu den aus dem Stand der Technik bekannten spurgebundenen Oberleitungsbussen, deren Stromabnehmer im Fahrbetrieb kontinuierlich die Oberleitung kontaktiert, werden der Oberleitungsstromabnehmer und die elektrische Kontakteinrichtung für die Rückleitung somit vorzugsweise nur zum Aufladen des Traktionsenergiespeichers ausgefahren.

Die Erfindung ist hinsichtlich des konstruktiven Aufbaus des Oberleitungsstromabnehmers nicht auf einen bestimmten Aufbau beschränkt. Der Oberleitungsstromabnehmer kann in an sich bekannter Weise als auf dem Dach des Fahrzeuges befestigter Bügelstromabnehmer, z. B. als Scherenstromabnehmer oder Einholmstromabnehmer, ausgeführt sein. Derartige Oberleitungsstromabnehmer weisen typischerweise eine Kontaktfläche auf, welche zur Stromabnahme unter Herstellung eines elektrischen Kontakts gegen die stromführende Leitung der Oberleitungsanlage gedrückt wird.

Ebenfalls ist die untere elektrische Kontakteinrichtung hinsichtlich des konstruktiven Aufbaus nicht auf einen bestimmten Aufbau beschränkt. Soll die Rückleitung unmittelbar über eine Fahrschiene erfolgen, kann die elektrische Kontakteinrichtung beispielsweise als Stempel, der von oben auf die Fahrschiene bzw. das Gleis absenkbar ist, ausgebildet sein. Gemäß einer weiteren Variante kann die elektrische Kontakteinrichtung eine Kontaktplatte umfassen, die durch Ausfahren mit einer an der Fahrbahnoberfläche angeordneten oder in die Fahrbahnoberfläche integrierten Kontaktplatte elektrisch leitend in Kontakt bringbar ist.

Gemäß einer bevorzugten Ausgestaltungsform ist die aus- und einfahrbare elektrische Kontakteinrichtung der elektrischen Anschlusseinrichtung auf der Fahrzeugunterseite angeordnet. Dies bietet den Vorteil, dass durch die Fahrzeugkarosserie ein Sicherheitsabstand zu Personen, die sich in der Nähe des Fahrzeugs aufhalten, sichergestellt werden kann.

Eine weitere Möglichkeit der erfindungsgemäßen Realisierung sieht vor, dass die elektrische Anschlusseinrichtung Mittel zur Überprüfung der elektrischen Kontaktierung des Oberleitungsstromabnehmers und/oder der elektrischen Kontakteinrichtung umfasst, die ausgeführt sind, vor Beginn des Ladevorgangs einen Zustand der elektrischen Kontaktierung zu ermitteln und/oder die maximale Ladeleistung zu bestimmen. Die elektrische Kontaktierung kann beispielsweise durch Bestimmung des Übergangswiderstandes an der Kontaktstelle bestimmt werden.

Diese Variante bietet den Vorteil, dass vor dem Starten des Ladevorgangs eine Kontaktüberprüfung der durch den Oberleitungsstromabnehmer und/oder durch die untere Kontakteinrichtung ausgebildete(n) temporäre(n) Leistungsschnittstelle(n) vorgenommen werden kann.

Bei derartigen temporären Leistungsschnittstellen, bei denen die elektrische Kontaktierung wie im vorliegenden Fall unter direkten Umwelteinflüssen nur temporär hergestellt wird, kann die Kontaktqualität beispielsweise durch Laub etc. auf der Oberleitung oder den Gleisen bzw. der Kontaktplatte stark variieren.

In Abhängigkeit von der ermittelten Kontaktqualität kann die maximale Ladeleistung angepasst werden, um im Falle einer schlechten Kontaktqualität eine nicht daran angepasste Übertragungsleistung und daraus resultierend eine mögliche Überlastung der Leistungsschnittstelle zu vermeiden.

Derartige Mittel zur Überprüfung der elektrischen Kontaktierung sind an sich aus dem Stand der Technik bekannt und beispielsweise in den Druckschriften DE 10 2005 042 087 B3, WO 2005 044 614 A1 oder DE 10 2010 026 435 A1 beschrieben.

Eine besonders vorteilhafte Variante sieht hierbei vor, dass die Mittel zur Überprüfung der elektrischen Kontaktierung einen ersten Hilfskontakt umfassen, der elektrisch isoliert zu einer Kontaktfläche des Oberleitungsstromabnehmers, welche zur Stromabnahme unter Herstellung eines elektrischen Kontakts gegen die stromführende Leitung der Oberleitungsanlage gedrückt wird, angeordnet ist. Der erste Hilfskontakt ist ferner so zu der Kontaktfläche angeordnet, dass, wenn die Kontaktfläche zur Ausbildung eines elektrischen Leistungspfades in Kontakt mit der stromführenden Leitung der Oberleitungsanlage gebracht ist, der erste Hilfskontakt die stromführende Leitung der Oberleitungsanlage ebenfalls kontaktiert. Hierbei ist der erste Hilfskontakt über einen Messpfad elektrisch parallel zu der Kontaktfläche geschaltet. Ferner umfassen gemäß dieser Variante die Mittel zur Überprüfung der elektrischen Kontaktierung eine erste Messeinrichtung zur Zustandserfassung der elektrischen Kontaktierung zwischen dem Oberleitungsstromabnehmer und der stromführenden Leitung der Oberleitungsanlage, die ausgeführt ist, über den Messpfad einen Spannungsabfall an der elektrischen Kontaktierung zwischen dem Oberleitungsstromabnehmer und der stromführenden Leitung der Oberleitungsanlage und/oder eine mit dem Spannungsabfall korrelierende Größe, beispielsweise den Übergangswiderstand, zu bestimmen. Die Messeinrichtung kann beispielsweise eine Spannungsmesseinrichtung sein, die die Spannungsdifferenz zwischen dem Hilfskontakt und dem Oberleitungsstromabnehmer misst, die von dem Übergangswidertand an der Kontaktstelle und damit von der Qualität der elektrischen Kontaktierung zwischen dem Oberleitungsstromabnehmer und der stromführenden Leitung der Oberleitungsanlage abhängig ist.

Ein besonderer Vorzug dieser Varianten liegt somit darin, dass mittels einer einfachen konstruktiven Erweiterung der Leistungsschnittstelle durch Vorsehen des Hilfskontakts und des Messpfades der Übergangswiderstand der elektrischen Kontaktierung gemessen werden kann und es somit möglich ist, die Qualität der elektrischen Kontaktierung zwischen dem Oberleitungsstromabnehmer und der stromführenden Leitung der Oberleitungsanlage direkt und ohne störende Einflüsse von Leitungswiderständen etc. zu bestimmen.

In vergleichbarer Weise kann alternativ hierzu oder zusätzlich ein weiterer Hilfskontakt an der unteren elektrischen Kontakteinrichtung vorgesehen sein, um die Qualität der elektrischen Kontaktierung zwischen der unteren elektrischen Kontakteinrichtung einerseits und der Fahrschiene bzw. der Kontaktplatte andererseits zu bestimmen.

Gemäß dieser Variante umfassen die Mittel zur Überprüfung der elektrischen Kontaktierung ebenfalls einen Hilfskontakt, nachfolgend als zweiter Hilfskontakt bezeichnet, der elektrisch isoliert zu einer Kontaktfläche der elektrischen Kontakteinrichtung ist. Der zweite Hilfskontakt ist ferner so zu der Kontaktfläche der elektrischen Kontakteinrichtung angeordnet, dass, wenn die Kontaktfläche der elektrischen Kontakteinrichtung zur Ausbildung der Rückleitung elektrisch leitend in Kontakt mit der Fahrschiene bzw. der Kontaktplatte gebracht ist, der zweite Hilfskontakt die Fahrschiene bzw. die Kontaktplatte ebenfalls kontaktiert. Hierbei ist der zweite Hilfskontakt ebenfalls über einen Messpfad, nachfolgend auch als zweiter Messpfad, elektrisch parallel zu der Kontaktfläche der elektrischen Kontakteinrichtung geschaltet. Ferner umfassen gemäß dieser Variante die Mittel zur Überprüfung der elektrischen Kontaktierung wiederum eine Messeinrichtung zur Zustandserfassung der elektrischen Kontaktierung zwischen der elektrischen Kontakteinrichtung und der Fahrschiene bzw. der Kontaktplatte, die ausgeführt ist, über den zweiten Messpfad einen Spannungsabfall an der elektrischen Kontaktierung zwischen der elektrischen Kontakteinrichtung und der Fahrschiene bzw. der Kontaktplatte und/oder eine mit dem Spannungsabfall korrelierende Größe zu bestimmen.

Für beide Varianten mit dem Hilfskontakt gilt, dass der Hilfskontakt und der Messpfad für im Vergleich zum Oberleitungsstromabnehmer bzw. im Vergleich zu der elektrischen Kontakteinrichtung vernachlässigbar kleine Ströme ausgelegt sind. Ferner kann die Messeinrichtung so ausgeführt sein, dass der Strom durch die Messeinrichtung vernachlässigbar klein ist, was beispielsweise in Näherung durch den sehr großen und im Idealfall unendlich hohen Innenwiderstand der Messeinrichtung, die beispielsweise als Spannungsmesser ausgeführt ist, erfüllt ist. Ferner kann der Messpfad so ausgeführt sein, dass der Spannungsverlust in dem Messpfad vernachlässigbar klein ist.

Mit anderen Worten können der Hilfskontakt, der Messpfad und/oder die Messeinrichtung so ausgelegt sein, dass kein oder ein vernachlässigbar kleiner Strom fließt, falls mittels der Messeinrichtung über den Hilfskontakt und den Messpfad der Spannungsabfall oder ein Übergangswiderstand unter Last an der Leistungsschnittstelle bestimmt wird. Der Hilfskontakt ist somit vorzugsweise nicht als Leistungskontakt ausgelegt. Dadurch kann die Höhe des Übergangswiderstands bzw. die Höhe des Spannungsabfalls unter Last und damit die Qualität der elektrischen Kontaktierung genau bestimmt werden.

Ein nicht erfindungsgemäßer Aspekt betrifft eine Ladestation für einen Omnibus, insbesondere für einen nicht spurgebundenen Omnibus. Die Ladestation weist eine an der Fahrbahnoberfläche einer Haltestelle des Omnibusses angeordnete oder in die Fahrbahnoberfläche der Haltestelle integrierte Kontakteinrichtung auf, z. B. eine Kontaktplatte, die elektrisch leitend mit einem beabstandet zur der Haltestelle verlaufenden Gleis verbunden ist. Die Ladestation weist ferner eine stromführende Oberleitung auf, die mittels eines Oberleitungsabgriffes an eine Oberleitung für ein auf dem Gleis fahrendes Schienenfahrzeug angeschlossenen ist und abschnittsweise über der Haltestelle verläuft.

Dies bietet den Vorteil, dass Bushaltestellen, die in der Nähe einer Oberleitung bzw. eines Gleises eines schienengebundenen Fahrzeugs, z. B. einer Straßenbahn, liegen, über eine vorgenannte Anbindung an die Infrastruktur des Schienenfahrzeugs durch entsprechende Oberleitungsabspannungen und zugänglich verlegte Anbindungen an den Rückleitungskontakt (Schiene) mit vergleichsweise geringem baulichen Aufwand gleichzeitig als Ladestationen für E-Busse genutzt werden können. Ferner kann das Fahrzeug durch Ausfahren des Oberleitungsstromabnehmers und der unteren Kontakteinrichtung geladen werden, ohne dass der Busfahrer aussteigen muss.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines Fahrzeugs gemäß einer Ausführungsform der Erfindung;
- Figur 2: eine schematische Draufsicht einer Ladestation gemäß einer Ausführungsform der Erfindung; und
- Figur 3: eine schematische Prinzipdarstellung einer Ladeschnittstelle mit Hilfskontakt gemäß einer Ausführungsform der Erfindung.

Gleiche oder funktional äquivalente Elemente sind in allen Figuren mit denselben Bezugszeichen bezeichnet.

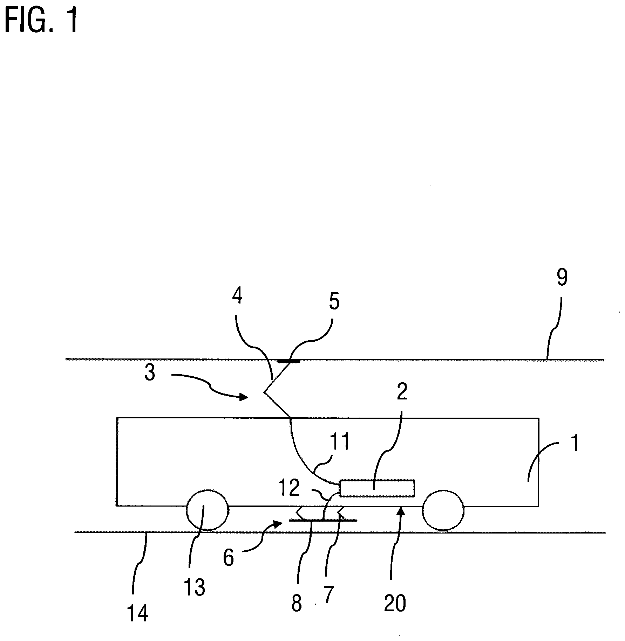

Figur 1 zeigt in einer schematischen Seitendarstellung ein Fahrzeug 1, das beispielsweise als nicht spurgebundener Omnibus ausgebildet sein kann. Das Fahrzeug 1 weist einen nicht dargestellten elektrischen Antrieb auf, der zum Antrieb des Fahrzeugs 1, insbesondere zum Antreiben von Rädern 13 des Fahrzeugs 1, ausgebildet ist. Weiterhin weist das Fahrzeug 1 einen Energiespeicher 2 auf, der beispielsweise als Akkumulator und/oder als Kondensatorspeicher aufgebaut ist. Der Energiespeicher 2 dient als Traktionsspeicher und versorgt den elektrischen Antrieb mit elektrischer Energie.

Zum Laden des Energiespeichers 2 kann dieser mit einer externen Energiequelle verbunden werden. Hierzu ist auf dem Dach des Omnibusses 1 ein Oberleitungsstromabnehmer 3 vorgesehen. Der Stromabnehmer 3 kann als Bügelstromabnehmer ausgeführt sein kann, der ein- und ausfahrbar ist. Der Stromabnehmer 3 umfasst eine elektrisch leitende Kontakteinrichtung 5, z. B. in Form eines Bügels oder einer Kontaktplatte etc., und ein die Kontakteinrichtung 5 tragendes Gestänge 4, welches gelenkig mit dem Fahrzeug 1 verbunden ist. Das Gestänge 4 kann wahlweise eine Hub- oder Senkbewegung ausführen. Durch eine Hubbewegung wird der Stromabnehmer 3 ausgefahren, um eine obere Kontaktfläche 5a der Kontakteinrichtung gegen die stromführende Leitung 9 einer Oberleitungsanlage zu drücken, um so den Oberleitungsstromabnehmer 3 elektrisch leitend in Kontakt mit der einpoligen Oberleitungsanlage zu bringen. Der Oberleitungsstromabnehmer 3 ist ferner über eine elektrische Leitung 11 mit dem Traktionsspeicher 2 verbunden. Derartige Oberleitungsstromabnehmer sind an sich aus dem Stand der Technik bekannt und müssen hier nicht näher beschrieben werden.

Das Fahrzeug 1 umfasst ferner eine an der Fahrzeugunterseite angeordnete elektrische Kontakteinrichtung 6, umfassend eine elektrisch leitende Platte 8, die wiederum über ein an der Fahrzeugunterseite angeordnetes Gestänge 7 ein- und ausfahrbar ist. Über Senkbewegung des Gestänges 7 kann die elektrisch leitende Platte 8 bis auf eine Fahrbahnoberfläche 14 abgesenkt werden, um dort elektrisch leitend in Kontakt mit einer Kontaktplatte (in Figur 1 nicht sichtbar) gebracht zu werden, die in die Fahrbahnoberfläche 14 eingelassen bzw. in diese integriert ist.

Die in die Fahrbahnoberfläche 14 integrierte Kontaktplatte ist elektrisch leitend mit einem Gleis bzw. einer Fahrschiene verbunden, so dass durch Kontaktierung der Platte 8 mit dieser in die Fahrbahnoberfläche integrierten Kontaktplatte eine Rückleitung ausgebildet werden kann.

Ein elektromotorisch angetriebener Omnibus 1, der mit einem Oberleitungsstromabnehmer 3 und einer unteren elektrischen Kontakteinrichtung 6 ausgerüstet ist, kann wie folgt geladen werden. Wenn der Omnibus 1 an einer gekennzeichneten Stelle unterhalb der Oberleitung der Straßenbahn zum Halten gebracht wird, kann der Fahrer durch Betätigung eines entsprechenden Steuerelements (nicht gezeigt) den Oberleitungsstromabnehmer 3 und die untere Kontakteinrichtung 6 ausfahren, so dass diese die stromführende Leitung 9 bzw. die in die Fahrbahn eingelassene Kontaktplatte elektrisch leitend kontaktieren. Ferner besteht die Möglichkeit, mittels einer Kontaktüberprüfung, die nachfolgend noch detaillierter beschrieben wird, vor Beginn des Ladevorgangs die Kontaktierung zu überprüfen und die maximale Ladeleistung zu ermitteln.

Der Ladevorgang wird durch Einfahren der ober- und unterseitigen Kontakteinrichtungen 3, 6 des Fahrzeugs 1 beendet. Auf diese Weise können derartig ausgerüstete Omnibusse 1 eine Oberleitungsinfrastruktur von Schienenfahrzeugen mitnutzen.

Falls beispielsweise der Omnibus 1 dieselbe Haltestelle wie eine Straßenbahn nutzt, kann die Oberleitungsinfrastruktur unmittelbar zum Laden des Traktionsenergiespeichers des Omnibusses mitgenutzt werden, in dem der Oberleitungsstromabnehmer die über der Haltestelle verlaufende Oberleitung kontaktiert und mittels der unteren Kontakteinrichtung das Gleis zur Ausbildung der Rückleitung kontaktiert.

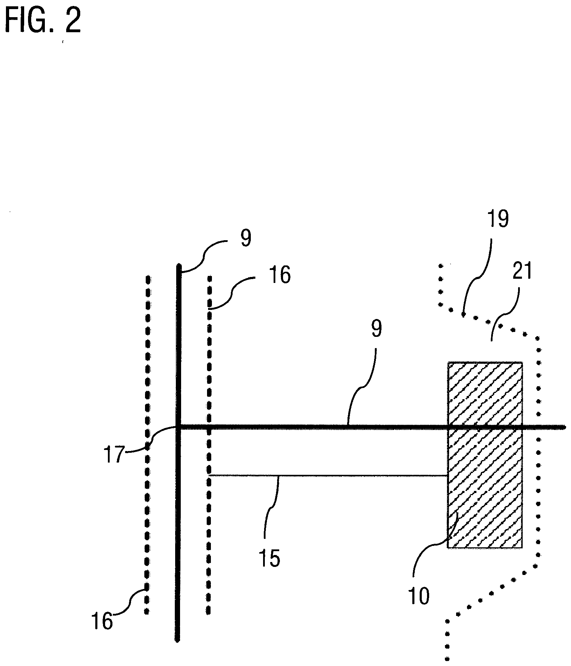

Nutzt der Omnibus eine separate Haltestelle, kann ein Aufladen des Traktionsenergiespeichers ermöglicht werden, in dem eine Anbindung an die Infrastruktur des Schienenfahrzeugs durch entsprechende Oberleitungsabspannungen und zugänglich verlegte Anbindungen an den Rückleitungskontakt (Schiene) vorgesehen ist. Dies ist nachfolgend anhand von Figur 2 illustriert.

Figur 2 zeigt eine schematische Draufsicht einer Ladestation gemäß einer Ausführungsform der Erfindung, bei der die Haltestellen des Fahrzeugs in der Nähe der Oberleitung / des Gleises liegen. Mit dem Bezugszeichen 19 ist eine Haltebucht für einen Omnibus 1 dargestellt. Die Fahrbahnoberfläche 21 der Haltebucht 19 weist eine integrierte Kontaktplatte 10 auf, die über die Leitung 15 elektrisch mit einem in der Nähe verlaufenden Gleis 16 eines Schienenfahrzeugs, z. B. einer Straßenbahn verbunden ist. Ferner ist eine stromführende Oberleitung 9 vorgesehen, die mittels eines Oberleitungsabgriffes 17 an eine Oberleitung 9 für ein auf den Gleisen 16 fahrendes Schienenfahrzeug (nicht gezeigt) angeschlossen ist und abschnittsweise über der Haltestelle 19 verläuft. Fährt nun ein Bus (nicht gezeigt) in die Haltebucht 19 ein, kann der Traktionsspeicher 2 wiederum durch Ausfahren des Oberleitungsstromabnehmers 3 und der unteren Kontakteinrichtung 6 erfolgen, wenn der Oberleitungsstromabnehmer 3 die Oberleitung 9 kontaktiert und die untere Kontaktplatte 8 elektrisch leitend in Kontakt mit der Kontaktplatte 10 gebracht wird. Figur 2 zeigt, dass bei einer entsprechenden Anbindung an die Infrastruktur von in der Nähe verlaufenden Schienenfahrzeugen Haltestellen für Omnibusse bereitgestellt werden, die zugleich ein Laden eines Traktionsenergiespeichers des Omnibusses ermöglichen.

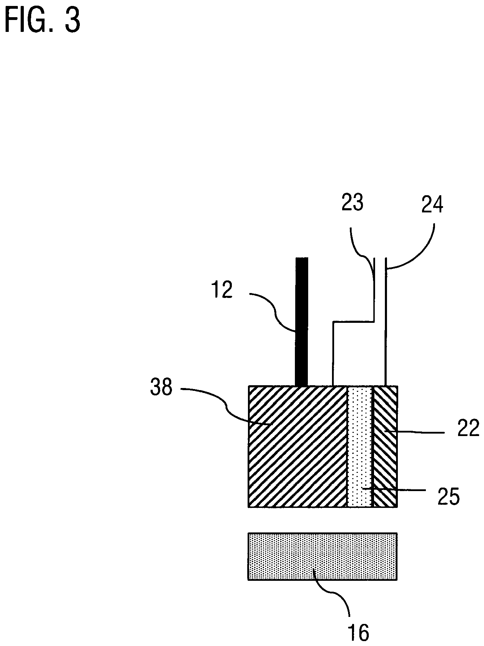

Figur 3 zeigt eine schematische Prinzipdarstellung einer Ladeschnittstelle mit Hilfskontakt gemäß einer Ausführungsform der Erfindung. Figur 3 zeigt schematisch eine Querschnittsansicht in Längsrichtung eines Gleises bzw. einer Fahrschiene 16.

Hierbei ist die untere elektrische Kontakteinrichtung statt mit einer Kontaktplatte mit einem stempelförmigen Leistungskontakt 38 ausgestattet, der in Kontakt mit einer Fahrschiene 16 bringbar ist (Figur 3 zeigt nur den Zustand, in dem der Stromabnehmer 38 nicht in Kontakt mit der Schiene 16 ist). Mit dem Bezugszeichen 12 ist wiederum die Stromleitung des bezeichnet, die den Leistungskontakt 38 mit dem Traktionsenergiespeicher 2 verbindet.

Ferner ist ein Hilfskontakt 22 über eine elektrische Isolierung 25 an dem Leistungskontakt 38 befestigt, derart, dass, wenn der Leistungskontakt 38 in Kontakt mit der Fahrschiene 16 gebracht wird, der Hilfskontakt 22 ebenfalls auf der Oberfläche der Fahrschiene 16 aufliegt und diese elektrisch kontaktiert.

Der Hilfskontakt 22 ist wiederum über einen Messpfad 23, 24 elektrisch parallel zu dem Stromabnehmer 38 geschaltet. Der Messpfad umfasst eine erste Messleitung 23, die an dem Leistungskontakt 38 elektrisch kontaktiert ist, und eine zweite Messleitung 24, die an dem Hilfskontakt 22 kontaktiert ist. Nicht gezeigt ist eine Messeinrichtung zur Zustandserfassung der elektrischen Kontaktierung zwischen dem Leistungskontakt 38 und der Fahrschiene 16, die mit den beiden Messleitungen 23, 24 des Messpfades verbunden ist und den Spannungsabfall zwischen dem Hilfskontakt 22 und dem Leistungskontakt 38 misst. Der messbare Spannungsabfall ist wiederum abhängig von der Kontaktqualität und damit dem entstehenden Übergangswiderstand zwischen dem Leistungskontakt und der Fahrschiene 16.

Ist beispielsweise die über den Messpfad 23, 24 von der Messeinrichtung gemessene Spannung größer als ein vorbestimmter Schwellwert, kann dies als Zeichen für einen zu hohen Übergangswiderstand an dem Leistungskontaktpaar 16, 38, das von dem Leistungskontakt 38 und der Schiene 16 ausgebildet wird, angesehen werden.

Angelehnt an das Prinzip der Vier- und Dreileitermessung wird mittels des Hilfskontakts 22 und des Messpfades 23, 24 ein vernachlässigbar kleiner Messstrom eingespeist und parallel dazu die Spannung, die am Kontaktwiderstand des Leistungskontaktpaares 16, 38 anfällt, abgegriffen, aus der direkt ein Maß für den Zustand der elektrischen Kontaktierung zwischen den beiden Leistungskontakten des Kontaktpaares abgeleitet werden kann.

Eine Steuereinrichtung (nicht gezeigt) ist vorgesehen und ausgebildet, die über den elektrischen Leistungspfad zu übertragene Ladeleistung zu reduzieren oder die Übertragung von elektrischer Leistung über den elektrischen Leistungspfad zu beenden, falls der mittels der Messeinrichtung unter Last gemessene Spannungsabfall oder die mit dem Spannungsabfall korrelierende Größe einen vorbestimmten Schwellwert überschreitet.

Im Unterschied zu den Leistungskontakten 16, 38, über die der Ladestrom übertragen wird, kann der Hilfskontakt 22, der lediglich als Messkontakt dient, für, im Vergleich zu den über das Leistungskontaktpaar 16, 38 fließenden Ladeströmen, kleine Ströme ausgelegt werden. Mit anderen Worten sind der Hilfskontakt 22, der Messpfad 23, 24 und die Messeinrichtung so ausgelegt, dass bei einer Messung des Spannungsabfalls und/oder der mit dem Spannungsabfall korrelierenden Größe in Form des Übergangswiderstands über den Hilfskontakt 22 und den Messpfad 23, 24 kein oder ein vernachlässigbar kleiner Strom fließt.

Ferner ist anzumerken, dass auch die in Figur 1 gezeigte elektrische Kontaktplatte 8 in analoger Weise um einen derartigen Hilfskontakt 22 und Messpfad 23, 24 erweitert werden kann.

Ferner ist anzumerken, dass auch der Oberleitungsstromabnehmer 3 mit einem entsprechendem Hilfskontakt 22 und Messpfad 23, 24 ausgestattet werden kann. Gemäß dieser Abwandlung wäre die Darstellung in Figur 2 um 180° gedreht, und die Fahrleitung 16 wäre in dieser Variante als Oberleitung und der Stromabnehmer 38 als Kontakteinrichtung 5 des Oberleitungsstromabnehmers 3 ausgebildet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Fahrzeug, z. B. Omnibus
- 2: Elektrischer Energiespeicher
- 3: Oberleitungsstromabnehmer
- 4: Bügel
- 5: Kontaktplatte
- 5a: Kontaktfläche
- 6: Untere elektrische Kontakteinrichtung
- 7: Bügel
- 8: Kontaktplatte
- 9: Oberleitung
- 10: Kontaktplatte
- 11, 12: Stromleitungen
- 13: Rad
- 14: Fahrbahn
- 15: Elektrische Verbindung
- 16: Gleis
- 17: Oberleitungsabgriff
- 19: Haltebucht
- 20: Unterseite Fahrzeug
- 21: Fahrbahnoberfläche in Haltebucht
- 22: Hilfskontakt
- 23: Erste Messleitung
- 24: Zweite Messleitung
- 25: Elektrische Isolierung
- 38: Leistungskontakt

## Patentansprüche

1. Kraftfahrzeug, mit
einem Energiespeicher (2) für elektrische Energie;
einem Elektroantrieb, der mit dem Energiespeicher verbunden ist; und
einer elektrischen Anschlusseinrichtung, über die der Energiespeicher (2) zum Laden des Energiespeichers (2) mit einer externen Energiequelle verbunden werden kann, umfassend einen aus- und einfahrbaren Oberleitungsstromabnehmer (3) zur Einspeisung elektrischer Energie aus einer stromführenden Leitung (9) einer Oberleitungsanlage und eine aus- und einfahrbare elektrische Kontakteinrichtung (6), die sich im unteren Bereich des Fahrzeuges befindet und die zur Ausbildung einer Rückleitung elektrisch leitend in Kontakt mit einer Fahrschiene und/oder einer Kontaktplatte (10) bringbar ist;
**dadurch gekennzeichnet, dass** die elektrische Anschlusseinrichtung Mittel zur Überprüfung der elektrischen Kontaktierung des Oberleitungsstromabnehmers und/oder der elektrischen Kontakteinrichtung umfasst, die ausgeführt sind, einen Zustand der elektrischen Kontaktierung und/oder die maximale Ladeleistung vor Beginn des Ladevorgangs zu ermitteln,
wobei die Mittel zur Überprüfung der elektrischen Kontaktierung umfassen:
a1) einen ersten Hilfskontakt, der elektrisch isoliert zu einer Kontaktfläche des Oberleitungsstromabnehmers (3), welche zur Stromabnahme unter Herstellung eines elektrischen Kontakts gegen die stromführende Leitung (9) der Oberleitungsanlage gedrückt wird, angeordnet ist und der so zu der Kontaktfläche angeordnet ist, dass, wenn die Kontaktfläche zur Ausbildung eines elektrischen Leistungspfades in Kontakt mit der stromführenden Leitung (9) der Oberleitungsanlage gebracht ist, der erste Hilfskontakt die stromführende Leitung (9) der Oberleitungsanlage ebenfalls kontaktiert, wobei der erste Hilfskontakt über einen ersten Messpfad elektrisch parallel zu der Kontaktfläche geschaltet ist; und
a2) eine erste Messeinrichtung zur Zustandserfassung der elektrischen Kontaktierung zwischen dem Oberleitungsstromabnehmer (3) und der stromführenden Leitung (9) der Oberleitungsanlage, die ausgeführt ist, über den ersten Messpfad einen Spannungsabfall an der elektrischen Kontaktierung zwischen dem Oberleitungsstromabnehmer (3) und der stromführenden Leitung (9) der Oberleitungsanlage und/oder eine mit dem Spannungsabfall korrelierende Größe zu bestimmen;
und/oder
wobei die Mittel zur Überprüfung der elektrischen Kontaktierung umfassen:
b1) einen zweiten Hilfskontakt (22), der elektrisch isoliert zu einer Kontaktfläche (38) der elektrischen Kontakteinrichtung ist und der so zu der Kontaktfläche (38) der elektrischen Kontakteinrichtung angeordnet ist, dass, wenn die Kontaktfläche (38) der elektrischen Kontakteinrichtung zur Ausbildung der Rückleitung elektrisch leitend in Kontakt mit der Fahrschiene (16) oder der Kontaktplatte gebracht ist, der zweite Hilfskontakt die Fahrschiene (16) oder die Kontaktplatte ebenfalls kontaktiert, wobei der zweite Hilfskontakt (22) über einen zweiten Messpfad (23, 24) elektrisch parallel zu der Kontaktfläche (38) der elektrischen Kontakteinrichtung geschaltet ist; und
b2) eine zweite Messeinrichtung zur Zustandserfassung der elektrischen Kontaktierung zwischen der elektrischen Kontakteinrichtung und der Fahrschiene und/oder der Kontaktplatte, die ausgeführt ist, über den zweiten Messpfad (23, 24) einen Spannungsabfall an der elektrischen Kontaktierung zwischen der elektrischen Kontakteinrichtung und der Fahrschiene und/oder der Kontaktplatte und/oder eine mit dem Spannungsabfall korrelierende Größe zu bestimmen.

2. Kraftfahrzeug nach Anspruch 1, **dadurch gekennzeichnet, dass** die elektrische Anschlusseinrichtung ausgeführt ist,
(a) zum Laden des Energiespeichers den Oberleitungsstromabnehmer (3) auszufahren, um ihn elektrisch leitend in Kontakt mit der stromführenden Leitung (9) der Oberleitungsanlage zu bringen, und die elektrische Kontakteinrichtung (6) auszufahren, um sie elektrisch leitend in Kontakt mit der Fahrschiene und/oder der Kontaktplatte (10) zu bringen; und
(b) für einen Fahrbetrieb den Oberleitungsstromabnehmer (3) und die elektrische Kontakteinrichtung (6) wieder einzufahren.

3. Kraftfahrzeug nach Anspruch 1 oder 2, **dadurch gekennzeichnet, dass** die aus- und einfahrbare elektrische Kontakteinrichtung (6) der elektrischen Anschlusseinrichtung auf der Fahrzeugunterseite (20) angeordnet ist.

4. Kraftfahrzeug nach Anspruch 3, **dadurch gekennzeichnet, dass** die elektrische Kontakteinrichtung (6) eine Kontaktplatte (8) umfasst, die durch Ausfahren mit einer an der Fahrbahnoberfläche (14) angeordneten oder in die Fahrbahnoberfläche (14) integrierten Kontaktplatte (10) elektrisch leitend in Kontakt bringbar ist.

5. Kraftfahrzeug nach einem der vorhergehenden Ansprüche, **dadurch gekennzeichnet, dass** das Kraftfahrzeug als elektrisch angetriebenes Nutzfahrzeug, vorzugsweise als elektrisch angetriebener Omnibus (1), ausgeführt ist.

## Claims

1. Motor vehicle having
an energy storage device (2) for electrical energy; an electric drive that is connected to the energy storage device; and
an electrical connecting device by way of which it is possible to connect the energy storage device (2) to an external energy source so as to charge the energy storage device (2), comprising an overhead line current collector (3) that can be extended and retracted so as to supply electrical energy from a current-conducting line (9) of an overhead line system and an electrical contacting device (6) that can be extended or retracted, that is located in the lower region of the vehicle, and that can be brought into electrically conductive contact with a running rail and/or a contact plate (10) so as to form a return circuit;
**characterized in that**, the electrical connecting device comprises means for checking the electrical contacting arrangement of the overhead line current collector and/or the electrical contacting device and said means are embodied so as to determine a state of the electrical contacting arrangement and/or the maximal charging power before starting the charging process,
wherein the means for checking the electrical contacting arrangement comprise:
a1) a first auxiliary contact that is arranged electrically insulated with respect to a contact surface of the overhead line current collector (3) and said contact surface is pressed against the current-conducting line (9) of the overhead line system so as to collect current while producing an electrical contact and said first auxiliary contact is arranged with respect to the contact surface in such a manner that if the contact surface is brought into contact with the current-conducting line (9) of the overhead line system so as to form an electrical power path, the first auxiliary contact likewise contacts the current-conducting line (9) of the overhead line system, wherein the first auxiliary contact is electrically connected in parallel to the contact surface by way of a first measuring path; and
a2) a first measuring device for determining the state of the electrical contacting arrangement between the overhead line current collector (3) and the current-conducting line (9) of the overhead line system, said first measuring device being embodied so as to determine a voltage drop by way of the first measuring path at the electrical contacting arrangement between the overhead line current collector (3) and the current-conducting line (9) of the overhead line system and/or a variable that correlates with the voltage drop;
and/or
wherein the means for checking the electrical contacting arrangement comprise:
b1) a second auxiliary contact (22), that is electrically insulated with respect to a contact surface (38) of the electrical contacting device and that is arranged with respect to the contact surface (38) of the electrical contacting device in such a manner that if the contact surface (38) of the electrical contacting device is brought into electrically conductive contact with the running rail (16) or the contact plate so as to form the return line, the second auxiliary contact likewise contacts the running rail (16) or the contact plate, wherein the second auxiliary contact (22) is connected by way of a second measuring path (23, 24) in an electrical manner in parallel to the contact surface (38) of the electrical contacting device; and
b2) a second measuring device for determining the state of the electrical contacting arrangement between the electrical contacting device and the running rail and/or the contact plate, said second measuring device being embodied so as to determine by way of the second measuring path (23, 24) a voltage drop at the electrical contacting arrangement between the electrical contacting device and the running rail and/or the contact plate and/or to determine a variable that correlates with the voltage drop.

2. Motor vehicle according to Claim 1, **characterized in that** the electrical connecting device is embodied,
(a) so as to charge the energy storage device, to extend the overhead line current collector (3) in order to bring said current collector into electrically conductive contact with the current-conducting line (9) of the overhead line system, and to extend the electrical contacting device (6) in order to bring said contact device into electrically conductive contact with the running rail and/or the contact plate (10); and
(b) so as to retract the overhead line current collector (3) and the electrical contacting device (6) for a driving operation.

3. Motor vehicle according to Claim 1 or 2, **characterized in that**, the extendable and retractable electrical contacting device (6) of the electrical connecting device is arranged on the vehicle underside (20).

4. Motor vehicle according to Claim 3, **characterized in that**, the electrical contacting device (6) comprises a contact plate (8) that by means of extension can be brought into electrically conductive contact with a contact plate (10) that is arranged on the road surface (14) or that is integrated into the road surface (14).

5. Motor vehicle according to any one of the preceding claims, **characterized in that** the motor vehicle is embodied as an electrically driven utility vehicle, preferably as an electrically driven omnibus (1).

## Revendications

1. Véhicule automobile comprenant
un accumulateur d'énergie (2) pour de l'énergie électrique,
un mécanisme propulseur électrique qui est relié à l'accumulateur d'énergie ; et
un dispositif de raccordement électrique par le biais duquel l'accumulateur d'énergie (2) peut être relié à une source d'énergie externe en vue de charger l'accumulateur d'énergie (2), comprenant un pantographe de caténaire (3) qui peut être sorti et rentré pour injecter de l'énergie électrique depuis une ligne électrique (9) d'une installation à caténaire et un dispositif de contact électrique (6) qui peut être sorti et rentré, lequel se trouve dans la zone inférieure du véhicule et peut être amené en contact électriquement conducteur avec un rail de circulation et/ou une plaque de contact (10) en vue de former une ligne de retour ;
**caractérisé en ce que** le dispositif de raccordement électrique comprend des moyens pour contrôler l'établissement du contact électrique du pantographe de caténaire et/ou du dispositif de contact électrique, lesquels sont réalisés pour déterminer un état de l'établissement du contact électrique et/ou de la puissance de charge maximale avant le début de l'opération de charge,
les moyens pour contrôler l'établissement du contact électrique comprenant :
a1) un premier contact auxiliaire, qui est disposé de manière électriquement isolée par rapport à une surface de contact du pantographe de caténaire (3), qui est poussé, pour le prélèvement du courant, contre la ligne électrique (9) de l'installation à caténaire en établissant un contact électrique et qui est disposé par rapport à la surface de contact de telle sorte que lorsque la surface de contact est amenée en contact avec la ligne électrique (9) de l'installation à caténaire en vue de former un trajet de puissance électrique, le premier contact auxiliaire entre également en contact avec la ligne électrique (9) de l'installation à caténaire, le premier contact auxiliaire étant branché électriquement en parallèle avec la surface de contact par le biais d'un premier trajet de mesure ; et
a2) un premier dispositif de mesure destiné à l'acquisition de l'état de l'établissement de contact électrique entre le pantographe de caténaire (3) et la ligne électrique (9) de l'installation à caténaire, lequel est réalisé pour déterminer par le biais du premier trajet de mesure une chute de tension au niveau de l'établissement du contact électrique entre le pantographe de caténaire (3) et la ligne électrique (9) de l'installation à caténaire et/ou une grandeur corrélée avec la chute de tension ;
et/ou
les moyens pour contrôler l'établissement du contact électrique comprenant :
b1) un deuxième contact auxiliaire (22), qui est disposé de manière électriquement isolée par rapport à une surface de contact (38) du dispositif de contact électrique et qui est disposé par rapport à la surface de contact (38) du dispositif de contact électrique de telle sorte que lorsque la surface de contact (38) du dispositif de contact électrique est amenée en contact électriquement conducteur avec le rail de circulation (16) ou la plaque de contact en vue de former la ligne de retour, le deuxième contact auxiliaire entre également en contact avec le rail de circulation (16) ou la plaque de contact, le deuxième contact auxiliaire (22) étant branché électriquement en parallèle avec la surface de contact (38) du dispositif de contact électrique par le biais d'un deuxième trajet de mesure (23, 24) ; et
b2) un deuxième dispositif de mesure destiné à l'acquisition de l'état de l'établissement de contact électrique entre le dispositif de contact électrique et le rail de circulation et/ou la plaque de contact, lequel est réalisé pour déterminer par le biais du deuxième trajet de mesure (23, 24) une chute de tension au niveau de l'établissement du contact électrique entre le dispositif de contact électrique et le rail de circulation et/ou la plaque de contact et/ou une grandeur corrélée avec la chute de tension.

2. Véhicule automobile selon la revendication 1, **caractérisé en ce que** le dispositif de raccordement électrique est exécuté pour
(a) sortir le pantographe de caténaire (3) en vue de charger l'accumulateur d'énergie électrique afin de l'amener en contact électriquement conducteur avec la ligne électrique (9) de l'installation à caténaire, et sortir le dispositif de contact électrique (6) afin de l'amener en contact électriquement conducteur avec le rail de circulation et/ou la plaque de contact (10) ; et
(b) rentrer de nouveau le pantographe de caténaire (3) et le dispositif de contact électrique (6) pour un mode de déplacement.

3. Véhicule automobile selon la revendication 1 ou 2, **caractérisé en ce que** le dispositif de contact électrique (6) qui peut être sorti et rentré du dispositif de raccordement électrique est disposé sur le côté inférieur du véhicule (20) .

4. Véhicule automobile selon la revendication 3, **caractérisé en ce que** le dispositif de contact électrique (6) comprend une plaque de contact (8) qui, en la faisant sortir, peut être amenée en contact électriquement conducteur avec une plaque de contact (10) disposée sur la surface de la voie de circulation (14) ou intégrée dans la surface de la voie de circulation (14).

5. Véhicule automobile selon l'une des revendications précédentes, **caractérisé en ce que** le véhicule automobile est réalisé sous la forme d'un véhicule utilitaire à propulsion électrique, de préférence sous la forme d'un autobus (1) à propulsion électrique.
